# EUROPEAN PATENT APPLICATION

(11) **EP 4 621 353 A1**
(43) Date of publication of application: **24.09.2025**
(21) Application number: 24164177.8
(22) Date of filing: 18.03.2024
(51) Int. Cl.: G01D 5/14, F15B 15/28

(54) **SENSOR TARGET SHAFT FOR POSITION DETECTION, SENSOR UNIT, SENSOR ASSEMBLY, PNEUMATIC APPLICATION AND VEHICLE**

(71) Applicant: KNORR-BREMSE Systeme für Nutzfahrzeuge GmbH, 80809 München (DE)
(72) Inventor: KUMBHAR, Vinay, 411057 Mulshi Pune Maharashtra (IN); BANGAD, Rahul, 411057 Mulshi Pune Maharashtra (IN); TRENCSÉNI, Balázs, 2459 Rácalmás (HU); JADHAV, Abhishek, 411057 Mulshi Pune Maharashtra (IN)

(57) **Abstract**

The present invention relates to a sensor target shaft (1) comprising a target (10) for position detection of the target (10) by a sensor (25) comprised by a sensor unit (2) based on changes in a magnetic field,
wherein the sensor target shaft (1) longitudinally extends along a longitudinal axis (X1) and is configured to be translationally movable in the direction of the longitudinal axis (X1) between a first position and a second position defining a detection length (DL₂₂),
wherein the sensor target shaft (1) comprises a target carrier (11) extending along the longitudinal axis (X1) comprising or being attached to the target (10),
wherein the length (L₁₀) of the target (10) in the longitudinal direction (X1) is less than the detection length (DL₂₂), and
wherein an influence per length unit of the target (10) on a magnetic field is more than an influence per length unit of the target carrier (11) on the magnetic field.

## Description

The present invention relates to a sensor target shaft comprising a target for position detection of the target by a sensor comprised by a sensor unit based on changes in a magnetic field. The present invention also relates to a sensor unit comprising a sensor for position detection of the target based on changes in a magnetic field in response to a movement of such sensor target shaft, a sensor assembly for position detection of the target of the sensor target shaft by a sensor comprised by the sensor unit, a pneumatic application comprising the sensor assembly, and a vehicle comprising the sensor assembly or the pneumatic application.

For position detection, such as detecting a position of an actuator of gear and clutch actuation devices comprised by, for example, commercial vehicles, a sensor shaft in operational connection to the actuator or comprised by the actuator is moved along a sensor configured to detect changes in a magnetic field caused by such movement. In other words, the movement of the sensor shaft and thereby the changes in the magnetic field depending on the respective position of the sensor shaft with respect to the sensor along a detection length corresponds directly or indirectly to a position of the actuator. In such configurations, the sensor shaft is a rod of a single material with a longitudinal axis providing a constant cross-section with respect to the longitudinal axis of its entire length. As a result, the sensor shaft as such is assumed as a target of the position detection by the sensor. A respective length of the target is thereby defined by the length of the sensor shaft and is more than the detection length. However, a respective position detection may not provide sufficiently precise results in an intended application.

It is an object of the present invention to improve the accuracy in position detection based on changes in a magnetic field.

The object is solved by the subject matter of the independent claims. Further aspects of the present invention are subject to the dependent claims.

According to the present invention, a sensor target shaft comprises a target for position detection of the target by a sensor comprised by a sensor unit based on changes in a magnetic field. The sensor target shaft extends longitudinally along a longitudinal axis and is configured to be translationally movable in the direction of the longitudinal axis between a first position and a second position defining a detection length. The sensor target shaft comprises a target carrier extending along the longitudinal axis comprising or being attached to the target. The length of the target in the longitudinal direction is less than the detection length. An influence per length unit of the target on a magnetic field is more than an influence per length unit of the target carrier on the magnetic field.

The sensor target shaft may, for example, be used in an inductive position detection sensor assembly. As apparent from this example, the term "magnetic field" is not restricted to a magnetic field consisting only of magnetic field lines but may also comprise electric field lines in terms of an electromagnetic field. As a basic principle with respect to a position detection based on changes in a magnetic field or electromagnetic field, respectively, a respective sensor assembly comprises a sensor unit with a sensor as detection means providing an active sensor surface, e.g. provided by a PCB, which detects a change in a magnetic field due to a movement of a target into or within the magnetic field. Accordingly, the sensor provides a detection region in accordance with the active surface and the magnetic field. With respect to the exemplary inductive position detection sensor assembly, the active surface of the sensor allows detection of changes in the electromagnetic field as well as providing the electromagnetic field. If a target approaches the active surface of the sensor, the electromagnetic field changes and a respective voltage signal indicating the position of the target is output.

According to the present invention, the target is provided by a sensor target shaft extending in a longitudinal direction. The sensor target shaft comprises a target carrier as one portion of the sensor target shaft and the target as another portion of the sensor target shaft. For example, the target carrier is operatively connected to a moving component the position of which is to be represented by the position detection of the target comprised by the sensor target shaft at the opposed end of the sensor target shaft in the longitudinal direction with respect to the end provided by the target carrier operatively connected to the moving component. The term "operatively connected" represents a direct connection to the moving component as well as an indirect connection such as via intermediate components to transfer a movement of the moving component into a corresponding movement of the target carrier and therefore of the sensor target shaft and target, respectively.

The sensor target shaft, and therefore the target carrier as well as the target, is translationally moveable between a first position and a second position, which correspond to a detection length for a respective position detection. For example, in an application to detect a position of a gear shift in a transmission with the sensor target shaft operatively connected to or comprised by the gear shift, the first position of the sensor target shaft may be representative of a first gear and the second position of the sensor target shaft may be representative of a second gear. Accordingly, the sensor provides a detection region to detect a change in the respective magnetic field at least along the detection length. In other words, the first position and the second position are representative of the relevant positions to be detected with the maximum distance between each other and therefore the detection length is the length for position detection in accordance with such maximum distance. However, intermediate positions, such as corresponding to a neutral gear with respect to the previous example of a gear shift position in a transmission, may also be detected as positions within the maximum distance for relevant positions to be detected or the respective movement of the sensor target shaft between the first position and the second position.

With respect to the detection length extending in the longitudinal direction, the length of the target is less than said detection length. Accordingly, if the target is moved into or within the detection region along a detection length, the target does not extend over the entire detection length between the first position and the second position. In further consideration of the influence per length unit of the target on the magnetic field being more than the influence per length unit of the target carrier on the magnetic field, the change in the magnetic field by moving the target along the detection length within the detection region of the sensor is mainly influenced by the target which is restricted to a distinct region of the detection region along the detection length. By restricting the target to a distinct region along the detection length, the resolution for the position detection is improved. In this context, the influence per length unit defines the ability of a component to change the magnetic field with respect to another component of the same length or with respect to length unit. As a result, the magnetic field for position detection is mainly influenced by the target along the detection length restricted to a distinct region, wherein the target carrier may not significantly contribute to the change in the magnetic field, preferably only up to a neglectable change not resulting in any position detection uncertainties.

In some embodiments, the mass of the target along the length of the target is higher than the mass of the target carrier along the same length as the length of the target.

For example, assuming the same material for the target and the target carrier, a higher mass of the target along the length of the target with respect to target carrier along the same length may be achieved by an increased volume and/or density of the target along such length. Alternatively or in addition, the target may be composed of or comprise a material different from the material of the target carrier to achieve a higher mass.

In some embodiments, the mass of the target along the length of the target is between 0.005 and 0.010 kg, preferably about 0.008 kg.

The mass of the target may be preferably as small as possible to provide a compact design of the target and therefore a respective sensor assembly and to reduce requirements with respect to the kinematics for moving the target. On the other hand, the mass of the target requires a minimum mass for position detection. Further, with respect to the mass ratio between the target and the target carrier, a minimum mass of the target may be required to allow the target carrier to carry the target.

In some embodiments, the cross-sectional area of the target perpendicular to the longitudinal axis is more than the cross-sectional area of the target carrier perpendicular to the longitudinal axis.

The respective cross-sectional area of the target and/or the target carrier may be constant over the length in the longitudinal direction. However, the respective cross-sectional area of the target and/or the target carrier may also vary, wherein, for example, the minimum cross-sectional area of the target may still be more than the maximum cross-sectional area of the target carrier with respect to the portion of the target carrier within the detection length. Due to the cross-sectional area of the target being more than the cross-sectional area of the target carrier, the gap between the target and the sensor may provide a minimum distance in the radial direction of with respect to the longitudinal direction, while the target carrier provides a maximum gap. Further, due to the difference in cross-sectional areas of the target and the target carrier, the transition from the target to the target carrier in the longitudinal direction may be formed as a step, preferably a sharp step, to support position detection based on the clearly distinct target volume. The shape of the target and the respective transition from the target to the target carrier may further influence a respective change in the magnetic field.

In some embodiments, the cross-sectional area of the target perpendicular to the longitudinal axis is between 100 mm² and 150 mm², preferably about 113 mm², and the cross-sectional area of the target carrier perpendicular to the longitudinal axis is between 55 mm² and 85 mm², preferably about 64 mm².

The above ranges or values, respectively, for the cross-sectional areas of the target and the target carrier preferably apply at least for the different cross-sectional areas of the target and the target carrier at the transition from the target to the target carrier in the longitudinal direction. Accordingly, a step portion may be formed in at least one radial direction with respect to the longitudinal direction, preferably at least in a radial direction directed towards the active surface of the sensor, more preferably substantially perpendicular to the active surface of the sensor or providing the minimum distance between the target and the active surface of the sensor, respectively.

In some embodiments, a cross section of the target perpendicular to the longitudinal axis is of circular shape, preferably with a diameter of 10 to 15 mm, more preferably of about 12 mm, and/or a cross section of the target carrier perpendicular to the longitudinal axis is of circular shape, preferably with a diameter of 7 to 12 mm, more preferably of about 9 mm.

Preferably, the circular shape of the target and the circular shape of the target carrier are coaxial with respect to the longitudinal direction such that the projection of the target with respect to the carrier in the radial direction with respect to the longitudinal direction is substantially the same over the entire circumference. By such configuration, the target shaft is not required to be oriented in a predetermined rotational position about the longitudinal axis to achieve a predetermined radial distance to the active surface of the sensor, since the dimensional ratio of the target to the target carrier is the same in any rotational position.

In some embodiments, the target and the target carrier are of the same material, preferably of carburized hardened steel.

By selecting the same material for the target and the target carrier, the sensor target shaft may integrally provide the target and the target carrier. The different influence on the magnetic field may thereby simply be provided by using a monolithic rod and lathing the target carrier portion to a diameter less than the diameter of a remaining end as target. However, the different influences of the target and the target carrier may also be achieved by different densities of the same material, for example, by forming the target carrier as a hollow structure or a structure of higher porosity. In another example, alternatively or in addition, the target and the target carrier may be of the same parent material but the target and/or the target carrier may be coated and/or subject to a heat treatment or the like to alter the influencing factors on a magnetic field.

In another aspect, the present invention relates to a sensor unit comprising a sensor for position detection of the target based on changes in a magnetic field in response to a movement of a sensor target shaft as previously described along the sensor. The sensor unit comprises a sensor unit body extending in a longitudinal direction, a sensor unit body cavity extending in the longitudinal direction of the sensor unit body with a length in the longitudinal direction of the sensor unit body of at least the detection length of the sensor target shaft and at least one end of the sensor unit body cavity in the longitudinal direction of the sensor unit body being open for receiving the target, and a sensor for detection a position of the target based on changes in a magnetic field. The sensor unit body cavity provides at least one lateral surface extending in the longitudinal direction of the sensor unit body as a flat surface with the sensor arranged on the flat surface or under the flat surface.

Accordingly, a position detection can be performed by the sensor target shaft and therefore the target being translationally moved in the longitudinal direction into the sensor unit body cavity. In accordance with the detection length, the relative position of the sensor unit with respect to the sensor target shaft is determined such that the target is at least partially within the detection region of the sensor in the first position and in the second position to detect at least respective changes in the magnetic field representative of the first and second position.

Due to the at least one lateral surface of the sensor unit body cavity extending in the longitudinal direction of the sensor body unit being a flat surface the sensor may be easily arranged on or underneath the flat surface. For example, the sensor may be provided as or on a PBC as a flat component according to which the flat surface of the sensor unit body cavity corresponds to a mounting surface of the PCB.

The remaining lateral sides of the sensor unit body cavity may correspond the shape of the target to allow guidance of the target and/or to keep the interior volume of the sensor unit body cavity at a minimum.

In some embodiments, the width of the flat surface perpendicular to the extension of the flat surface in the longitudinal direction of the sensor unit body is equal to or more than the width of the sensing portion of the sensor, preferably equal to or more than the total width of the sensor.

For example, with the sensor being placed on the flat surface of the sensor unit body cavity, the width of the flat surface may be equal to or more than the respective total width of the sensor to ensure a predetermined positioning of a respective flat contact surface for attaching the sensor to the sensor unit. However, with the sensor being placed underneath the flat surface, it may be sufficient to restrict a width of the flat surface to the sensing portion or the active surface, respectively.

In principle, any feature described with respect to the sensor target shaft referring to the sensor unit is also applicable to the sensor unit and vice versa.

In another aspect, the present invention relates to a sensor assembly for position detection of a target of a sensor target shaft as previously described by a sensor comprised by a sensor unit as previously described based on changes in a magnetic field, wherein the longitudinal axis of the sensor target shaft is in parallel with the longitudinal axis of the sensor unit body cavity of the sensor unit.

Due to the longitudinal axis of the sensor target shaft is in parallel with the longitudinal axis of the sensor unit body cavity of the sensor unit, the distance between the target and the sensor remains constant along the detection length.

In some embodiments, a cross section of the target perpendicular to the longitudinal axis of the sensor target shaft is of circular shape and a cross section of the sensor unit body cavity perpendicular to the longitudinal axis of the sensor unit body cavity provides at least a circular shaped section in parallel to the circular shape of target.

As previously addressed, the cross-sectional shape of the sensor unit body cavity may thereby mainly correspond to the cross-sectional shape of the target except for the flat surface to accommodate the sensor.

In some embodiments, a gap extending in a direction perpendicular to the longitudinal axis of the sensor target shaft and perpendicular to the sensor between the sensor and the target received in the sensor unit body cavity is 0.2 mm to 2 mm, preferably 0.5 mm to 1.5 mm.

A minimum gap is required to avoid the target contacting or short-circuiting the sensor or being hampered in moving along the detection length. However, the gap should be limited to ensure a reliable position detection in a compact volume.

In principle, any feature described with respect to the sensor target shaft and/or the sensor unit, respectively, is also applicable to the sensor assembly and vice versa.

In another aspect, the present invention relates to a pneumatic application comprising a sensor assembly as previously described, wherein the sensor target shaft is attached to a piston of the pneumatic application to detect a position of the piston represented by the detection of the position of the target by the sensor.

Specifically, with respect to pneumatic applications, the sensor assembly allows the detection of the piston position represented by the sensor target shaft and may allow to further detect failures due to pressure fluctuations or leakage by detecting a position contrary to a control signal. Based on the ability to detect failures or at least differences in an actual und target position of the piston, the sensor assembly may be also used as part of a control system to regulate the pressure and/or to take further action in response to failure, e.g. to stop further action of the application and/or to generate a warning.

In some embodiments, the pneumatic application is a transmission or clutch.

As previously addressed, the sensor assembly may allow to detect a gear shift position in a transmission or an operational status of a clutch.

In principle, any feature described with respect to the sensor assembly and accordingly the sensor target shaft and/or the sensor unit is also applicable to the pneumatic application and vice versa.

In another aspect, the present invention relates to a vehicle comprising a sensor assembly as previously described or a pneumatic application as previously described, wherein the vehicle is a commercial vehicle.

Commercial vehicle may provide harsh environmental conditions in terms of vibrations, impacts and the like. Accordingly, the sensor assembly as such or with respect to a respective pneumatic application may allow a robust position detection in such environment.

In principle, any feature described with respect to the sensor assembly and accordingly the sensor target shaft and/or the sensor unit or the pneumatic application, respectively, is also applicable to the vehicle and vice versa.

Further advantages, aspects and details of the invention are subject to the claims, the following description of exemplary embodiments applying the principles of the invention, and the respective exemplary drawings.
**Figure 1** is a schematic lateral view of a sensor target shaft according to an exemplary embodiment;
**Figure 2A** is a schematic front view of a sensor unit according to an exemplary embodiment;
**Figure 2B** is a schematic perspective view of the sensor unit according to Fig. 2A;
**Figure 3A** is a schematic cross-sectional view of a sensor assembly comprising a sensor target shaft according to Fig. 1 and a sensor unit according to Figs. 2A, 2B; and
**Figure 3B** is a schematic front view of the sensor assembly according to Fig. 3B.

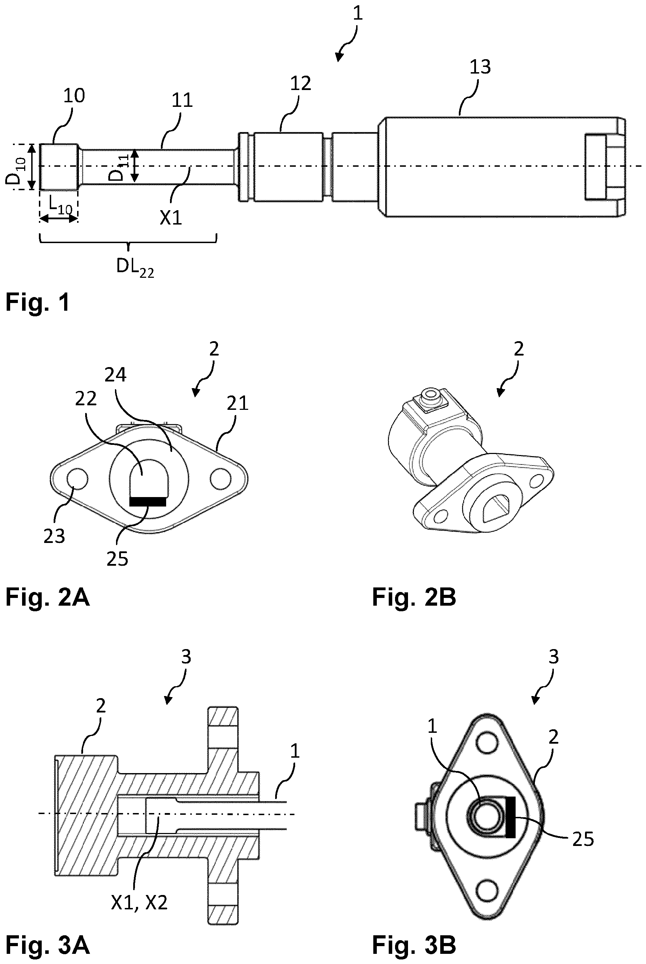

**Figure 1** shows a schematic lateral view of a sensor target shaft 1 according to an exemplary embodiment. The sensor target shaft 1 extends along a longitudinal direction in correspondence with a longitudinal axis X1 of the sensor target shaft 1. In the exemplary embodiment, the sensor target shaft 1 is a monolithic rod with a circular cross-sectional shape with respect to the longitudinal axis X1. The exemplary sensor target shaft 1 comprises a target 10 at one distal end of the sensor target shaft 1 in the longitudinal direction, followed, in the given order, by a target carrier 11, a shift shaft intermediate portion 12 and a shift shaft actuating portion 13. The shift shaft actuating portion is configured to be connected to a component the position of which is to be detected by detecting the position of the target 10. The shift shaft intermediate portion connects the target carrier 11 to the shift shaft actuating portion 13 and may be guided in a guidance of a sensor target shaft 1 (not shown). The target carrier 11 connects the target 10 to the shift shaft intermediate portion 12. Even though the sensor target shaft 1 in the exemplary embodiment is a monolithic rod with cross sections of a circular shape, in other embodiments, the sensor target shaft 1 may be at least partially of a different cross-sectional shape and/or may at least partially be composed of separate components to be attached to each other. For example, the target 10 may be attached to the target carrier 11, for example by being screwed on the target carrier 10, to be exchangeable and/or to be of a different material.

In a pneumatic application, such as a transmission with the shift shaft actuating portion 13 to be connected to a gear shift, the sensor target shaft 1 is translationally moveable in the longitudinal direction between a first position and a second position. The distance between the first position and the second position in the longitudinal direction corresponds to a detection length DL₂₂. With respect to the sensor assembly as described later, target 10 and part of the target carrier 11 of the sensor target shaft 1 extend over the detection length DL₂₂ to allow a respective position detection when introduced into a detection region of a sensor 25 of a sensor unit 2 (cf. Figure 2A). The target length L₁₀ of the target 10 in the longitudinal direction is less than the detection length DL₂₂. Further, the target diameter D₁₀ of the target in a radial direction perpendicular to the longitudinal axis X1 is less than the target carrier diameter D₁₁ of the target carrier 11. Accordingly, the target 10 provides a distinct volume within the detection length DL₂₂ differentiated from the target carrier 11 by a step in the transition of the target 10 to the target carrier 11. The influence of the target 10 on a magnetic field is thereby more than a respective influence of the target carrier 11.

In concrete, in the exemplary embodiment, the sensor target shaft 1 is made of carburized hardened steel with the target 10 having a constant target diameter D₁₀ of 12 mm and a target length L₁₀ of 10 mm. The mass of the target 10 is 0.008 kg. The target carrier 11 has a constant target carrier diameter D₁₁ of 9 mm.

**Figure 2A** shows a schematic front view of a sensor unit 2 according to an exemplary embodiment. The sensor unit 2 comprises a sensor unit body 21 with attachment portions 23, in the exemplary embodiment threaded holes for receiving screws, to attach the sensor unit body 21 to a sensor unit body carrier (not shown). Further, the sensor unit 2 forms an abutment portion 24 to provide an abutment for a sensor target shaft carrier. The sensor unit 2 comprises a sensor unit body cavity 22, which extends in a longitudinal direction to comply with a longitudinal axis X2 (cf. Fig. 3A) of the sensor unit body 21. The sensor unit body cavity 22 is open to one end of the sensor unit body cavity 22 in the longitudinal direction to receive the sensor target shaft 1 and the target 10, respectively. A lateral surface side of the sensor unit body cavity 22 is formed as a flat surface to carry a sensor 25, here provided by a PCB, on the flat surface.

The sensor 25 comprises a sensing region or active surface, respectively, to detect a change of a magnetic field or electromagnetic field, respectively. In the present embodiment, the sensor 25 is also configured to provide the magnetic field or electromagnetic field, respectively. However, in other embodiments, the magnetic field or electromagnetic field, respectively, may also be provided separately by another component of the sensor unit 2, e.g. being arranged at the end of the sensor unit body cavity 22 opposed to the open end of the sensor unit body cavity 22. In such event, the magnetic field or electromagnetic field, respectively, extends at least in the detection region of the sensor 25 over the applicable detection length DL₂₂ for detecting the position of the target 10 at least in the first position and in the second position.

**Figure 2B** shows a schematic perspective view of the sensor unit 2 according to Fig. 2A.

**Figure 3A** shows a schematic cross-sectional view of a sensor assembly 3 comprising a sensor target shaft 1 according to Fig. 1 and a sensor unit 2 according to Figs. 2A, 2B. Here, the longitudinal axis X1 of the sensor target shaft 1 and the longitudinal axis X2 of the sensor body unit 21 extend coaxially. The target 10 is shown in the first position received in the sensor unit body cavity 22. The second position of the target is reached by moving the sensor target shaft 1 and thereby the target 10 translationally along the longitudinal direction in a direction out of the sensor unit body cavity 22. The gap formed in the sensor unit body cavity 22 in the radial direction with respect to the longitudinal direction between the target 10 and the sensor 25 is 0.5 mm. In other embodiments, the gap is preferably not more than 1.5 mm.

**Figure 3B** shows a schematic front view of the sensor assembly 3 according to Fig. 3B. With respect to the sensor target shaft 1, Fig. 3B only shows the target 10 and the target carrier 11 to illustrate the different diameters thereof and their coaxial alignment.

The invention has been described with respect to exemplary embodiments. However, the invention is not limited to the exemplary embodiments.

### LIST OF REFERENCE SIGNS

- 1: sensor target shaft
- 2: sensor unit
- 3: sensor assembly
- 10: target
- 11: target carrier
- 12: shift shaft intermediate portion
- 13: shift shaft actuating portion
- 21: sensor unit body
- 22: sensor unit body cavity
- 23: attachment portion
- 24: abutment portion
- 25: sensor
- D₁₀: target diameter (target height)
- D₁₁: target carrier diameter (target height)
- DL₂₂: detection length
- L₁₀: target length
- X1: longitudinal axis (sensor target shaft)
- X2: longitudinal axis (sensor unit body)

## Claims

1. A sensor target shaft (1) comprising a target (10) for position detection of the target (10) by a sensor (25) comprised by a sensor unit (2) based on changes in a magnetic field,
wherein the sensor target shaft (1) extends longitudinally along a longitudinal axis (X1) and is configured to be translationally movable in the direction of the longitudinal axis (X1) between a first position and a second position defining a detection length (DL₂₂),
wherein the sensor target shaft (1) comprises a target carrier (11) extending along the longitudinal axis (X1) comprising or being attached to the target (10),
wherein the length (L₁₀) of the target (10) in the longitudinal direction (X1) is less than the detection length (DL₂₂), and
wherein an influence per length unit of the target (10) on a magnetic field is more than an influence per length unit of the target carrier (11) on the magnetic field.

2. The sensor target shaft (1) according to claim 1, wherein the mass of the target (10) along the length (L₁₀) of the target (10) is higher than the mass of the target carrier (11) along the same length as the length (L₁₀) of the target (10).

3. The sensor target shaft (1) according to claim 2, wherein the mass of the target (10) along the length (L₁₀) of the target (10) is between 0.005 and 0.010 kg, preferably about 0.008 kg.

4. The sensor target shaft (1) according to any one of the preceding claims, wherein the cross-sectional area of the target (10) perpendicular to the longitudinal axis (X1) is more than the cross-sectional area of the target carrier (11) perpendicular to the longitudinal axis (X1).

5. The sensor target shaft (1) according to claim 4, wherein the cross-sectional area of the target (10) perpendicular to the longitudinal axis (X1) is between 100 mm² and 150 mm², preferably about 113 mm², and the cross-sectional area of the target carrier (11) perpendicular to the longitudinal axis (X1) is between 55 mm² and 85 mm², preferably about 64 mm².

6. The sensor target shaft (1) according to any one of the preceding claims, wherein a cross section of the target (10) perpendicular to the longitudinal axis (X1) is of circular shape, preferably with a diameter of 10 to 15 mm, more preferably of about 12 mm, and/or a cross section of the target carrier (11) perpendicular to the longitudinal axis (X1) is of circular shape, preferably with a diameter of 7 to 12 mm, more preferably of about 9 mm.

7. The sensor target shaft (1) according to any one of the preceding claims, wherein the target (10) and the target carrier (11) are of the same material, preferably of carburized hardened steel.

8. A sensor unit (2) comprising a sensor (25) for position detection of the target (10) based on changes in a magnetic field in response to a movement of a sensor target shaft (1) according to any one of the preceding claims along the sensor (25), wherein the sensor unit (2) comprises
a sensor unit body (21) extending in a longitudinal direction (X2),
a sensor unit body cavity (22) extending in the longitudinal direction (X2) of the sensor unit body (22) with a length in the longitudinal direction (X2) of the sensor unit body (22) of at least the detection length (DL₂₂) of the sensor target shaft (1) and at least one end of the sensor unit body cavity (22) in the longitudinal direction (X2) of the sensor unit body (22) being open for receiving the target (10), and
a sensor (25) for detection a position of the target (10) based on changes in a magnetic field,
wherein the sensor unit body cavity (22) provides at least one lateral surface extending in the longitudinal direction (X2) of the sensor unit body (22) as a flat surface with the sensor (25) arranged on the flat surface or under the flat surface.

9. The sensor unit (2) according to claim 8, wherein the width of the flat surface perpendicular to the extension of the flat surface in the longitudinal direction (X2) of the sensor unit body (22) is equal to or more than the width of the sensing portion of the sensor (25), preferably equal to or more than the total width of the sensor (25).

10. A sensor assembly (3) for position detection of a target (10) of a sensor target shaft (1) according to any one of the claims 1 to 7 by a sensor (25) comprised by a sensor unit (2) according to any one of the claims 8 to 9 based on changes in a magnetic field, wherein the longitudinal axis (X1) of the sensor target shaft (1) is in parallel with the longitudinal axis (X2) of the sensor unit body cavity (22) of the sensor unit (2).

11. The sensor assembly (3) according to claim 10, wherein a cross section of the target (10) perpendicular to the longitudinal axis (X1) of the sensor target shaft (1) is of circular shape and a cross section of the sensor unit body cavity (22) perpendicular to the longitudinal axis (X2) of the sensor unit body cavity (22) provides at least a circular shaped section in parallel to the circular shape of target (10).

12. The sensor assembly (3) according to claim 10 or 11, wherein a gap extending in a direction perpendicular to the longitudinal axis (X1) of the sensor target shaft (1) and perpendicular to the sensor (25) between the sensor (25) and the target (10) received in the sensor unit body cavity (22) is 0.2 mm to 2 mm, preferably 0.5 mm to 1.5 mm.

13. A pneumatic application comprising a sensor assembly (3) according to any one of the claims 10 to 12, wherein the sensor target shaft (1) is attached to a piston of the pneumatic application to detect a position of the piston represented by the detection of the position of the target (10) by the sensor (25).

14. The pneumatic application according to claim 13, wherein the pneumatic application is a transmission or clutch.

15. A vehicle comprising a sensor assembly (3) according to any one of the claims 10 to 12 or a pneumatic application according to claim 13 or 14, wherein the vehicle is a commercial vehicle.
